# FASCICULE DE BREVET EUROPEEN

(11) **EP 3 104 585 B1**
(45) Date de publication et mention de la délivrance du brevet: **01.08.2018**
(21) Numéro de dépôt: 16174072.5
(22) Date de dépôt: 10.06.2016
(51) Int. Cl.: H04M 1/663, H04L 12/58, H04L 29/06, H04M 3/436, H04M 1/57, H04M 1/667, H04M 3/42, H04W 4/16, H04W 8/18

(54) **DISPOSITIF ET PROCÉDÉ DE TRAITEMENT D'UNE COMMUNICATION**
VORRICHTUNG UND VERFAHREN ZUR BEARBEITUNG EINER KOMMUNIKATION
APPARATUS AND METHOD FOR PROCESSING A COMMUNICATION

(30) Priorité: 12.06.2015 FR 1555354; 17.12.2015 FR 1562710
(43) Date de publication de la demande: 14.12.2016
(73) Titulaire: Orange, 75015 Paris (FR)
(72) Inventeur: BOUVET, Bertrand, 22700 Perros-Guirec (FR); TOUTAIN, François, 22300 Lannion (FR)
(74) Mandataire: Delumeau, François Guy

(56) Documents cités:
- EP-A1- 1 675 333
- US-A1- 2003 154 400
- US-A1- 2007 039 040
- US-A1- 2007 150 773
- US-A1- 2009 067 410
- ROSENBERG J ET AL: "The Session Initiation Protocol (SIP) and Spam draft-ietf-sipping-spam-02", INTERNET CITATION, 6 mars 2006 (2006-03-06), XP002442168, Extrait de l'Internet: URL:http://tools.ietf.org.html/draft-ietf- sipping-spam [extrait le 2007-07-06]

## Description

### Arrière-plan de l'invention

L'invention se rapporte au domaine général des télécommunications.

Elle concerne plus particulièrement le domaine du traitement des communications en vue d'un filtrage, et en particulier des appels téléphoniques, des appels passés dans le cadre d'une vidéoconférence, des communications de messagerie instantanée (en anglais « Instant Messaging »), et des messages textuels (SMS) ou multimédias (MMS).

Dans l'état actuel de la technique, il existe des procédés de filtrage d'appels par liste noire. Ces listes noires contiennent des numéros de téléphone d'appelants indésirables et permettent de filtrer un appel indésirable sur la base du numéro de téléphone de l'appelant. Il est également possible de bloquer les appels dont les numéros de téléphone des appelants sont masqués.

Il existe également des procédés de filtrage par liste blanche dans lesquels tous les appels téléphoniques sont filtrés à l'exception des appels téléphoniques dont le numéro de téléphone de l'appelant appartient à la liste blanche. Dans ce contexte il est fait référence aux documents d'art antérieur US 2003/154400 A1, EP 1 675 333 A1, US 2009/067410 A1 et US 2007/039040 A1. Certains opérateurs de télécommunications proposent en outre un service d'identification des appels masqués permettant de filtrer les appels masqués avant leur présentation à leur destinataire. Ainsi, dans le cas du service « stop secret » développé par Orange (marque déposée), l'appelant dont le numéro de téléphone est masqué est mis en communication avec un serveur qui lui demande de s'identifier vocalement. Si l'appelant ne fournit pas d'identification vocale, l'appel n'est pas présenté à l'appelé.

Malheureusement, ces procédures de filtrage par identification vocale ou par liste présentent des failles.

Certains centres d'appels ont mis en place une pratique consistant à falsifier lors de l'émission de leur appels téléphoniques leur numéro de téléphone afin qu'in fine les méthodes de filtrage par liste noire ou par identification vocale soit inefficaces.

D'autre part, la constitution d'une liste blanche est une opération longue et fastidieuse puisqu'elle nécessite le recensement de l'intégralité des numéros de téléphone des appelants dont on souhaite recevoir les appels. Ainsi, si on souhaite être en mesure de recevoir tous les appels en provenance d'une entreprise particulière, il est nécessaire de lister exhaustivement l'ensemble des numéros utilisés par l'ensemble des postes de cette entreprise.

Il existe donc un besoin d'une solution simple et efficace permettant d'améliorer d'une part l'efficacité du filtrage des communications et d'autre part l'expérience de l'utilisateur associée.

### Objet et résumé de l'invention

L'invention est telle que revendiquée dans les revendications indépendantes 1, 4, 10 et 11, des variantes préférées étant spécifiées dans les revendications dépendantes 2, 3, 5 à 9, 12 et 13.

Au sens de l'invention, l'expression « communication » est utilisée pour désigner indifféremment un appel téléphonique ou un appel en vidéoconférence ou encore plus largement tout service de communication tel que les services de communication par SMS ou les services de communication par messagerie instantanée.

Dans un mode particulier de réalisation, l'information de fiabilité est un identifiant certifié compris dans le message de signalisation de la communication.

Un identifiant certifié est un identifiant dont la valeur et l'intégrité sont garanties par les opérateurs des réseaux par lesquels transite la communication et qui est reconnu en tant que tel dans un message de signalisation de la communication. Un identifiant certifié peut aussi être un identifiant dont la valeur et l'intégrité sont garanties par un fournisseur de service ou un serveur d'un organisme tiers de confiance.

Une information de fiabilité peut en variante correspondre à des données, par exemple relatives à des précédentes communications.

Dans le cas où l'information de fiabilité est un identifiant certifié, il se trouve par exemple dans un champ particulier dédié d'un message de signalisation de la communication. En d'autres termes, les opérateurs de réseaux ou les fournisseurs de service de type OTT (en anglais « Over The Top ») sont, vis-à-vis de l'utilisateur du terminal destinataire, des tiers de confiance qui établissent l'identifiant certifié et garantissent la valeur de cet identifiant certifié lors de sa transmission par la signalisation jusqu'au destinataire. Un tel identifiant certifié est donc infalsifiable par l'appelant puisqu'il est inséré à chaque communication, par l'opérateur de réseau ou le fournisseur de service en charge de l'appelant ou bien via un tiers de confiance (ex : communication WebRTC identifiée et authentifiée par un tiers de confiance).

Le message de signalisation de la communication peut donc comporter un identifiant non certifié susceptible d'être présenté au(x) terminau(x) destinataire(s) dans le cadre d'un service de présentation du numéro ou de l'identité de l'appelant et un identifiant certifié au sens de l'invention géré par le réseau de communication et qui n'est pas destiné à être présenté aux utilisateurs des terminaux destinataires.

Il est à noter qu'un tel identifiant certifié est présent dans certaines signalisations de communication. Par exemple les messages de signalisation conforme à la norme SIP (définie par les documents IETF RFC 3261 et IETF RFC 3325 ou par une de leurs évolutions) comportent un champ PAI (« P_Asserted_Id ») contenant un identifiant certifié de l'appelant au sens de l'invention en supplément du champ FROM susceptible d'être présenté sur le ou les terminaux destinataires dans le cadre d'un service de présentation du numéro de l'appelant.

Dans un mode de réalisation particulier de l'invention, l'étape de traitement comporte une sous-étape de filtrage de la communication.

L'invention propose ainsi de filtrer (c'est à dire de transmettre ou de bloquer) une communication en fonction de la comparaison entre l'information de fiabilité et l'identifiant non certifié de l'émetteur. Cette information de fiabilité garantit avantageusement l'identification de l'appelant réellement à l'origine de la communication.

Dans un mode de réalisation particulier de l'invention :
- l'étape de traitement comporte une sous-étape de recherche de l'information de fiabilité dans une liste contenant des informations de fiabilité d'émetteurs associés à des identifiants non certifiés de ces émetteurs ; et
- la sous-étape de filtrage est effectuée en fonction de cette sous-étape de recherche.

Ainsi, l'invention propose également de filtrer une communication en fonction de l'appartenance ou de la non appartenance à une liste de l'information de fiabilité.

Dans un mode de réalisation particulier de l'invention, l'étape de traitement comporte :
- une sous-étape de notification d'au moins une caractéristique de la communication en fonction de l'étape de comparaison et/ou du résultat de l'étape de recherche de ladite information de fiabilité dans une liste contenant des informations de fiabilité d'émetteurs associés à des identifiants non certifiés de ces émetteurs.

L'invention propose ainsi également un moyen d'informer de manière simple le destinataire de la nature de la communication, et notamment de la probabilité que cette communication soit « sûre », et ainsi à l'inciter à accepter ou non la communication (décrocher un appel téléphonique, ne pas ouvrir un SMS ou un mail suspect,...).

Dans un mode de réalisation particulier de l'invention, l'étape de traitement prend en compte le type de la communication.

Ainsi et de manière avantageuse, le filtrage peut être effectué ou non en fonction du type de communication, selon par exemple que cette communication est un appel téléphonique, un message texte ou une visio-conférence.

L'invention propose également selon un deuxième aspect, un procédé de mise à jour d'une liste de filtrage des communications destinées à au moins un terminal destinataire, ce procédé comprenant :
- une étape de réception d'une communication à destination du terminal destinataire;
- une étape d'obtention d'un identifiant non certifié d'un émetteur de la communication compris dans un message de signalisation de la communication et d'une information de fiabilité; et
- sur requête d'un utilisateur, une étape d'ajout ou de suppression dans la liste de l'information de fiabilité en association avec l'identifiant non certifié.

Corrélativement, l'invention vise aussi un dispositif de mise à jour d'une liste de filtrage des communications destinées à au moins un terminal destinataire, ce dispositif comprenant :
- un module de réception d'une communication à destination du terminal destinataire ;
- un module d'obtention d'un identifiant non certifié de l'émetteur à l'origine de la communication compris dans un message de signalisation de la communication et d'une information de fiabilité ;
- un module d'ajout ou de suppression dans la liste, sur requête d'un utilisateur, de l'information de fiabilité en association avec l'identifiant non certifié.

Ainsi, l'invention permet à un utilisateur de construire dynamiquement une liste de filtrage des communications, cette liste comportant non pas les identifiants non certifiés des appelant présentés sur les terminaux destinataires comme dans l'état de la technique mais les identifiants certifiés par les opérateurs de réseaux ou les fournisseurs de services de type OTT.

L'homme du métier comprendra par la suite que cette liste principalement utilisée pour du filtrage (d'où son nom) est aussi utilisée comme un paramètre de l'étape de notification, y compris lorsque l'étape de traitement de l'invention ne met pas en oeuvre de filtrage.

Dans un mode particulier de réalisation, le procédé de traitement d'une communication comporte une étape préalable d'enregistrement dans la liste d'identifiants certifiés d'émetteurs en association avec des identifiants non certifiés de ces émetteurs.

Dans ce mode de réalisation, chaque paire d'identifiants certifié et non-certifié associée à chaque émetteur ayant donc émis une communication est sauvegardée dans la liste.

Dans un mode particulier de réalisation, ladite étape d'enregistrement est effectuée par l'utilisateur à partir de l'identifiant non-certifié.

Dans ce mode de réalisation, l'utilisateur a par exemple décidé de prendre l'appel d'un émetteur et découvre qu'il s'agit d'un appel émanant d'un centre d'appel dont il ne souhaite plus à l'avenir recevoir d'appel.

L'utilisateur consulte alors le registre des appels du terminal, sélectionne l'appel qu'il vient de recevoir à partir de l'identifiant non certifié qui lui a été présenté et met à jour la liste indiquant qu'il ne souhaite plus recevoir d'appel téléphonique de cet appelant.

Le dispositif de mise à jour ajoute ainsi dans la liste l'identifiant certifié en association avec l'identifiant non certifié.

Dans un mode particulier de réalisation, l'information de fiabilité est un identifiant certifié compris dans le message de signalisation de la communication.

De façon avantageuse, lorsque l'information de fiabilité est un identifiant certifié par les opérateurs de réseaux ou les fournisseurs de service, il ne peut être falsifié par les appelants. L'invention permet ainsi d'améliorer l'efficacité des procédés de filtrage par liste existants de l'état de la technique.

Le fait d'associer dans la liste les informations de fiabilité et les identifiants non certifiés permet à l'utilisateur de modifier ultérieurement cette liste en utilisant seulement l'identifiant non certifié de l'appelant.

Dans un mode de réalisation particulier de l'invention, la requête de l'utilisateur fait suite à une présentation d'un identifiant de l'appelant de l'appel sur au moins un terminal de l'appelé.

Autrement dit, la requête de l'utilisateur fait suite à la présentation classique du numéro de l'appelant. La mise en oeuvre de l'invention est ainsi avantageusement transparente pour l'utilisateur du terminal destinataire.

Dans un mode de réalisation particulier de l'invention, la liste est une liste noire.

Une telle liste noire rassemble ainsi dans une même structure informatique les identifiants certifiés et non certifiés des appelants dont l'usager du terminal destinataire ne souhaite pas recevoir de communication.

Dans ce mode de réalisation, l'invention permet de bloquer une communication, celle-ci n'étant pas acheminée jusqu'au terminal destinataire, si l'information de fiabilité compris dans un message de signalisation est compris dans cette liste noire.

Grace au filtrage réalisé par l'invention sur la base d'une information de fiabilité, on améliore ainsi les procédés de filtrage par liste noire existants en bloquant les appels indésirables même si l'identification de l'appelant destiné à être présentée sur le terminal destinataire a été falsifiée.

Dans un autre mode de réalisation de l'invention, l'étape d'ajout de l'information de fiabilité et de l'identifiant non certifié dans la liste noire n'est réalisée que si l'information de fiabilité est un identifiant certifié compris dans le message de signalisation de la communication et que cet identifiant certifié est différent de l'identifiant non certifié.

Ainsi, en comparant l'identifiant d'appel susceptible d'être présenté et dont la valeur n'est pas garantie avec l'identifiant de l'appelant certifié par les opérateurs de réseaux ou les fournisseurs de service, le dispositif de mise à jour de la liste peut détecter d'éventuelles tentatives de falsification de l'identification de l'appelant à présenter sur le terminal destinataire, cette détection autorisant l'étape d'ajout de l'identifiant certifié dans la liste noire de filtrage.

De façon avantageuse, l'invention peut ainsi être mise en oeuvre pour bloquer uniquement les communications pour lesquelles on détecte une falsification de l'identification de l'appelant.

Dans un mode de réalisation particulier de l'invention, la liste est une liste blanche.

Une telle liste blanche rassemble ainsi dans une même structure informatique les informations de fiabilité et les identifiants non certifiés des appelants dont l'usager du terminal destinataire souhaite recevoir les communications.

Dans ce mode de réalisation de l'invention, l'appel est transféré au terminal destinataire si une information de fiabilité est listée dans cette liste blanche.

Dans un mode particulier de réalisation de l'invention dans lequel l'information de fiabilité est un identifiant certifié, cet identifiant certifié par l'opérateur ou le fournisseur de service identifie une plage de numéros de postes attribuée par l'opérateur de réseau à un PBX (Private Automatic Branch eXchange) associé par exemple à une entreprise. Un tel identifiant certifié permet ainsi d'identifier non pas un numéro de poste particulier de l'entreprise mais l'ensemble des postes de l'entreprise.

L'invention facilite ainsi l'expérience utilisateur de l'utilisateur du procédé de filtrage par liste blanche en lui permettant d'utiliser une liste blanche dans laquelle l'intégralité des postes associés à un PBX sont accessibles par le biais d'une seule information de fiabilité.

En association avec les informations de fiabilité et les identifiants non certifiés, on peut ajouter dans la liste notamment :
- le type de la communication (appel téléphonique, messagerie instantanée, ...) ;
- et/ou l'identifiant du terminal destinataire.

Ces informations complémentaires permettent de faire des filtrages conditionnels : filtrage des appels téléphoniques pour certains terminaux, blocage de la vidéoconférence pour tous les terminaux, réception des SMS pour tous les terminaux ...

Dans un mode de réalisation particulier de l'invention, l'information de fiabilité est un identifiant certifié et plus particulièrement un identifiant PAI (pour « P_Asserted_Id ») conforme au protocole SIP (en anglais « Session Initiation Protocol ») ou un identifiant NDI (pour Numéro de Désignation de l'Installation ») conforme au protocole ISUP (en anglais ISDN Signalling User Part »).

Dans un autre mode de réalisation particulier de l'invention, ledit identifiant non certifié est un identifiant FROM conforme au protocole SIP ou un identifiant NDS (Numéro de Désignation Supplémentaire) conforme au protocole ISUP.

L'invention est ainsi compatible avec l'utilisation des normes SIP (défini par les documents IETF RFC 3261 et IETF RFC 3325 ou par une de leurs évolutions) et ISDN (défini par le document Q.931 de l'UIT (pour Union Internationale des Télécommunications ou par une de ses évolutions).

Dans un mode particulier de réalisation, les étapes du procédé de traitement et/ou les étapes du procédé de mise à jour sont déterminées par des instructions de programmes d'ordinateurs.

En conséquence, l'invention vise aussi un programme d'ordinateur sur un support d'informations, ce programme étant susceptible d'être mis en oeuvre dans un terminal de communication, une passerelle résidentielle, ou un équipement réseau, ce programme comportant des instructions adaptées à la mise en oeuvre des étapes d'un procédé de traitement et/ou d'un procédé de mise à jour tels que décrit ci-dessus.

Ce programme peut utiliser n'importe quel langage de programmation, et être sous la forme de codes source, codes objet, ou de codes intermédiaires entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, RAM, PROM, EPROM, un CD ROM ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

Des caractéristiques et avantages particuliers de la présente invention ressortiront de la description détaillée faite en référence aux figures dans lesquelles :
- la figure 1 représente dans leur environnement, un dispositif de traitement des communications et un dispositif de mise à jour conforme à l'invention dans un mode particulier de réalisation ;
- la figure 2 illustre un exemple d'architecture matérielle du dispositif de traitement de la figure 1;
- la figure 3 représente, sous forme d'ordinogramme, les principales étapes d'un procédé de traitement conforme à l'invention dans une variante d'implémentation dans laquelle la liste est une liste noire ;
- la figure 4 illustre un exemple d'architecture matérielle du dispositif de mise à jour de la figure 1 ;
- la figure 5 représente, sous forme d'ordinogramme, les principales étapes d'un procédé de mise à jour d'une liste de filtrage conforme à l'invention dans une variante d'implémentation dans laquelle la liste est une liste noire ; et
- la figure 6 représente les différentes sous-étapes de l'étape de notification du procédé de traitement.

### Description détaillée d'un mode de réalisation de l'invention

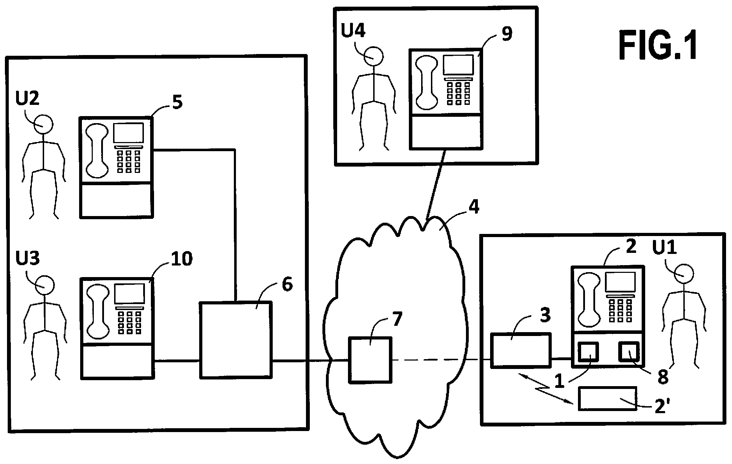

La **figure 1** représente, dans son environnement, un dispositif 1 de traitement des communications destinées à deux terminaux de communication 2 et 2'.

Dans le mode de réalisation décrit ici, le dispositif de traitement permet de filtrer des communications et de notifier l'utilisateur d'un degré de certification de la communication.

Dans le mode de réalisation décrit ici, l'information de fiabilité est un identifiant certifié P_Asserted_Id (PAI) conforme au protocole SIP (Session Initiation Protocol).

Dans ce mode de réalisation de l'invention, le filtrage utilise une liste noire L, cette liste noire rassemblant des identifiants certifiés associés à des identifiants non certifiés et pour chacun de ces couples, le type des communications qui doivent être bloquées pour chacun des terminaux 2 et 2' lorsque le message de signalisation de cette communication comporte l'identifiant certifié correspondant.

Dans l'exemple envisagé ici, la liste noire L contient l'identifiant certifié de la ligne reliant le terminal 9 de l'utilisateur U4 au réseau 4, cet identifiant certifié étant associé aux communications par sms et par messagerie instantanée.

Le terminal de communication 2 est, dans l'exemple illustré à la figure 1, un téléphone fixe permettant à l'utilisateur U1 dans le cadre d'un abonnement souscrit auprès d'un opérateur de réseau d'accéder à des services d'un réseau de communication 4 par l'intermédiaire d'une passerelle résidentielle 3.

Dans ce mode de réalisation, le dispositif de traitement 1 et la liste L sont incorporés dans le terminal 2. En variante ils pourraient être incorporés dans la passerelle résidentielle 3 ou dans un équipement du réseau 4.

Le terminal de communication 2' est, dans l'exemple illustré à la figure 1, un téléphone portable intelligent (aussi connus, en anglais, sous l'appellation de « smartphone) muni d'un logiciel de communication. Le téléphone intelligent 2' communique avec la passerelle résidentielle 3 par des moyens de connexion sans fil, par exemple en WiFi. Le logiciel de communication permet au téléphone intelligent 2' de s'enregistrer auprès d'un serveur du réseau de communication 4 afin d'accéder par l'intermédiaire de la passerelle résidentielle 3 aux services souscrits par l'utilisateur U1.

En d'autres termes, l'utilisateur U1 dispose de deux terminaux de communication 2 et 2' dit terminaux destinataire qui sont reliés à la passerelle résidentielle 3 et qui sont accessibles par une même identité publique, en l'occurrence le numéro de la ligne téléphonique à laquelle est connectée la passerelle résidentielle 3.

En particulier, l'utilisateur U1 peut être informé simultanément sur les terminaux 2 et 2' des appels téléphoniques en provenance des terminaux 5, 9 et 10 des utilisateurs U2, U4 et U3. Le réseau de communications 4 peut être un réseau mobile (ex. UMTS (Universal Mobile Telecommunications System)) ou fixe (ex : RTC, VoIP DSL, Fibre, Câble), filaire ou sans fil (ex : WLAN (Wireless Local Area Network)), privé ou public, etc.

Dans l'exemple envisagé ici, on suppose que l'architecture du réseau 4 est une architecture IMS (en anglais « IP Multimedia Subsystem »).

On suppose en outre que l'utilisateur U2 est un employé d'un centre d'appel qui dispose d'un terminal de communication 5 permettant d'établir des appels téléphoniques en utilisant une signalisation d'appel conforme au protocole SIP tel que défini dans les normes IETF RFC 3261 et RFC3325.

De façon traditionnelle, l'opérateur du réseau 4 a attribué une tranche de numéros d'appel au centre d'appels. Le premier numéro de la tranche de numéros correspondant ici au numéro du standard téléphonique du centre d'appel et permet d'identifier la ligne physique reliant le centre d'appel au réseau de communications 4. Les autres numéros de la tranche de numéros attribués au centre d'appels sont attribués aux terminaux de communication, dont les terminaux 5 et 10, appartenant au centre d'appels.

Dans l'exemple décrit ici, on suppose que l'opérateur du réseau 4 a alloué la tranche de cent numéros 01 23 45 00-01 23 45 99 au centre d'appels. En d'autres termes, le numéro du standard du centre d'appels est le 01 23 45 00 et le numéro du terminal de communication 5 est le 01 23 45 05.

On suppose également que l'utilisateur U2 initie à partir de son terminal de communication 5 un appel téléphonique à destination des terminaux 2 et 2' de l'utilisateur U1 accessible par le numéro de téléphone associé à la ligne téléphonique à laquelle est reliée la passerelle résidentielle 3.

Le terminal de communication 5 transmet alors à destination de la passerelle résidentielle 3 un message de signalisation d'appel M1 de type SIP INVITE comportant un champ de type FROM dont le contenu et l'intégrité sont non certifiés par le réseau 4. Ce champ de type FROM contient le numéro de téléphone du poste (par exemple 01 23 45 05) alloué au terminal de communication 5.

Le message de signalisation d'appel M1 est d'abord reçu par un équipement PBX 6 (Private Automatic Branch eXchange) localisé dans les locaux du centre d'appels. L'équipement PBX 6 permet aux terminaux de communication 5 et 10 d'accéder au réseau 4.

On suppose ici que l'équipement PBX 6 est configuré pour modifier le champ FROM du message M1 de façon à ce que ce champ contienne un numéro de téléphone qui n'appartienne pas à la tranche de numéros consécutifs alloués au centre d'appels.

En d'autres termes, l'équipement PBX 6 remplace le numéro 01 23 45 05 contenu dans le champ FROM par un autre numéro, par exemple par le numéro 03 45 67 89.

L'équipement PBX 6 peut également configurer le message M1 pour qu'il contienne un champ PAI (P_Asserted_Id) conforme au protocole SIP et dans le champ duquel la valeur du champ FROM a été recopiée.

Puis l'équipement PBX 6 transmet le message M1 à un premier équipement 7 sous le contrôle de l'opérateur du réseau de communications 4.

Dans l'exemple envisagé ici, l'équipement 7 est un équipement P-CSCF (en anglais « Proxy Call/Session Control Function »).

Cet équipement P-CSCF 7 vérifie si le message M1 contient un champ PAI. Le cas échéant, l'équipement P-CSCF-7 modifie le champ PAI de sorte qu'il contienne le numéro de la ligne physique (i.e. le numéro du standard) reliant le centre d'appel au réseau de communications 4. Si le message M1 ne contient pas de champ PAI, l'équipement P-CSCF-7 en crée un et lui affecte le numéro de la ligne physique reliant le centre d'appel au réseau de communications 4.

En d'autres termes, l'équipement P-CSCF 7 configure le champ PAI pour qu'il contienne un identifiant certifié dont la valeur est le numéro 01 23 45 00 identifiant la ligne physique reliant le centre d'appel au réseau de communications 4.

Conformément au protocole SIP, l'équipement P-CSCF 7 ne regarde ni ne modifie la valeur contenue dans le champ FROM.

Le message M1 est ensuite transmis par l'équipement P-CSCF 7 à destination du terminal destinataire 2' au travers du réseau de communication 4 et de la passerelle résidentielle 3.

Le réseau de communication 4 transmet également un message M2 de signalisation de l'appel au terminal destinataire 2' par l'intermédiaire de la passerelle résidentielle 3.

Lors de sa transmission dans le réseau de communication 4 et au travers de la passerelle résidentielle 3, l'opérateur du réseau 4 garantit conformément à la norme SIP l'intégrité et la valeur du champ PAI du message M1, et du message M2. Par contre, l'opérateur du réseau 4 ne garantit pas l'intégrité du champ FROM. En d'autres termes, au sens de l'invention, le champ PAI du message M1 est un identifiant certifié de l'appelant et le champ FROM est un identifiant non certifié de l'appelant.

Les terminaux 2 et 2' peuvent notifier l'utilisateur U2 du degré de certification de l'appel lorsque celui-ci leur est transmis.

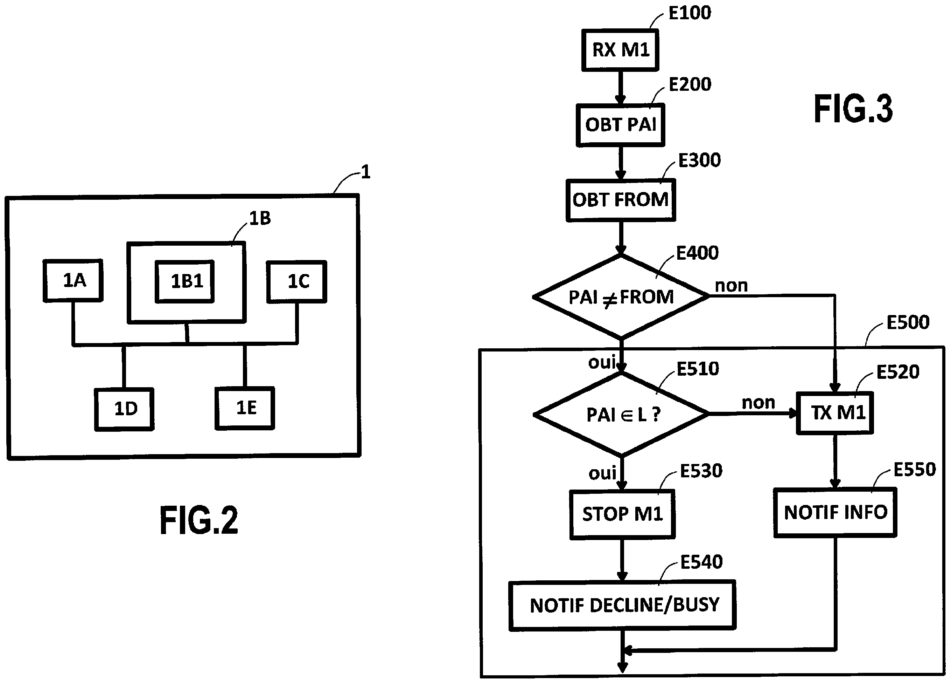

Nous allons maintenant décrire, en référence à la **figure 3****,** les principales étapes d'un procédé de traitement selon l'invention lors de la réception par le dispositif de traitement 1 d'un appel téléphonique émis par l'utilisateur U2. Lors d'une étape E100, le dispositif 1 reçoit le message M1 de signalisation d'appel indiquant que l'utilisateur U2 souhaite établir un appel téléphonique avec le terminal 2 de l'utilisateur U1.

De même le téléphone intelligent 2' présente la communication (par exemple en sonnant) à l'utilisateur U1 sur réception du message M2 de signalisation d'appel.

Le dispositif 1 analyse le message M1 et obtient un identifiant certifié (étape E200) et un identifiant non certifié (étape E300) de l'appelant à l'origine de l'appel en extrayant du message M1 de signalisation d'appel l'identifiant contenu dans le champ PAI et l'identifiant contenu dans le champ FROM. L'identifiant contenu dans le champ PAI constitue comme souligné précédemment un identifiant certifié par le réseau de communications 4.

Le dispositif 1 compare ensuite (étape E400) l'identifiant certifié PAI extrait du message M1 avec l'identifiant non certifié FROM, et en fonction du résultat exécute une étape de traitement (E500) comprenant plusieurs sous-étapes (E510 à E550).

Si l'identifiant certifié est différent de l'identifiant non certifié (réponse oui à l'étape E400) alors le dispositif 1 compare (étape E510) l'identifiant certifié PAI extrait du message M1 avec les identifiants certifiés listés dans la liste noire L.

Si l'identifiant PAI correspond à un identifiant certifié listé dans la liste noire L (réponse oui à l'étape E510), le dispositif 1 bloque (étape E530) l'appel à destination du terminal 2.

En variante, lors de l'étape E510, il est également vérifié si l'identifiant certifié listé dans la liste noire L est aussi associé au type de communication « appel téléphonique ». Si c'est le cas, le dispositif 1 bloque (étape E530) l'appel à destination du terminal 2. Selon cette variante, si l'identifiant certifié présent dans la liste noire L est associé à un type de communication, par exemple message texte, différent du type de la communication reçue à l'étape E100 (dans le cas présent, le type de la communication est un appel téléphonique), le dispositif 1 ne bloque pas l'appel à destination du terminal 2.

En variante, le dispositif 1 bloque l'appel à destination du terminal 2 dès que les identifiants FROM et PAI sont différents, que l'identifiant PAI corresponde ou non à un identifiant certifié listé dans la liste noire L, l'étape E510 n'étant alors pas mise en oeuvre.

Dans le mode de réalisation décrit ici, lorsque le dispositif 1 bloque l'appel à destination du terminal 2, lors d'une étape E540, le dispositif 1 transmet une requête de rejet de l'appel téléphonique.

Dans l'exemple décrit ici, le dispositif 1 transmet par l'intermédiaire du réseau de communication 4 une requête SIP de la série 6XX, typiquement une requête 603 DECLINE, à destination du terminal 5. Sur réception de cette requête 603 DECLINE, le réseau de communication 4 notifie au terminal destinataire 2' par l'intermédiaire de la passerelle résidentielle 3 que la communication émise par le terminal 5 de l'utilisateur U2 est rejeté par le terminal 2 de l'utilisateur U1. Sur réception de cette notification, le terminal 2' cesse de présenter la communication à l'utilisateur U1.

En variante, le dispositif 1 transmet par l'intermédiaire du réseau de communication 4 une requête SIP de la série 4XX, typiquement une requête 406 BUSY HERE, à destination du terminal 5.

Sur réception de cette requête 406 BUSY HERE, le réseau de communication 4 ne notifie pas au terminal destinataire 2' par l'intermédiaire de la passerelle résidentielle 3 que la communication émise par le terminal 5 de l'utilisateur U2 est rejeté par l'utilisateur U1. En d'autres termes, le terminal 2' continue de présenter la communication à l'utilisateur U1.

Si l'identifiant PAI ne correspond pas à un identifiant certifié listé et associé au type de communication « appel téléphonique » dans la liste noire L (réponse non à l'étape E510), le dispositif 1 transmet le message M1 (étape E520) au terminal 2 afin que l'appel soit présenté à l'utilisateur du terminal destinataire 2.

Si l'identifiant PAI est identique à l'identifiant FROM, le dispositif 1 transmet également le message M1 (étape E520) au terminal 2 afin que l'appel soit présenté à l'utilisateur.

Dans ces deux derniers cas pour lesquels l'appel est présenté à l'utilisateur, le dispositif 1 exécute une étape (E550) de notification permettant d'indiquer à cet utilisateur des informations sur la communication et particulièrement sur sa certification.

Cette étape de notification (E550) est optionnelle.

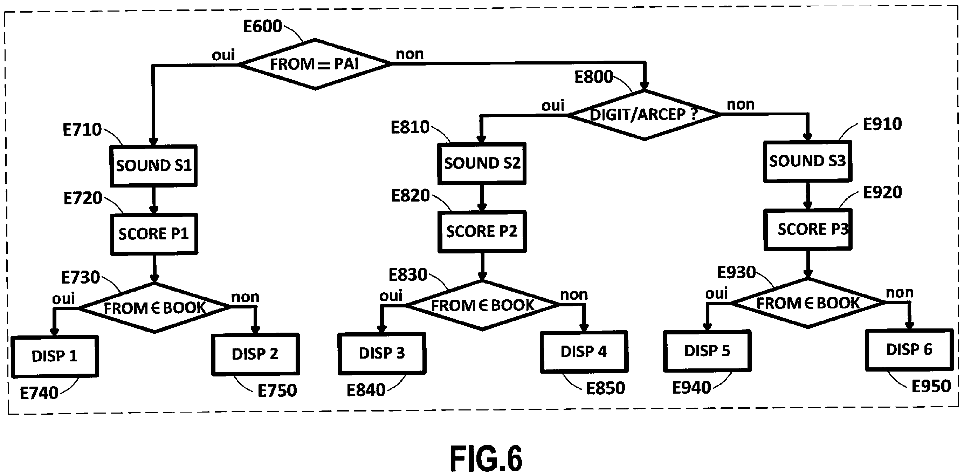

Cette étape de notification peut se décomposer en une série de sous-étapes (E600 à E960) représentées à la **figure 6****.**

Dans ce mode de réalisation, trois tests sont effectués : on vérifie si les identifiants PAI et FROM sont identiques ou non (E600). S'ils sont différents, on vérifie si leurs premiers chiffres sont quand même identiques ou si le FROM est conforme au plan ARCEP (Autorité de Régulation des Communications Electroniques et des Postes) (E800).

Enfin, on vérifie si l'identifiant FROM est présent dans un carnet d'adresses BOOK enregistré dans le terminal 2 (E730, , E830, E930).

En fonction du résultat de ces tests, le terminal destinataire 2 peut jouer une sonnerie spécifique, afficher une probabilité que le numéro appelant correspondant à l'identifiant FROM soit certifié ou encore afficher ce numéro dans une certaine typographie ou couleur.

Par exemple, dans ce mode de réalisation, un premier test (E600) compare l'identifiant non certifié FROM et l'identifiant certifié PAI.

Si ces identifiants sont identiques, le terminal 2 joue une sonnerie spécifique S1 (E710), puis affiche (E720) une probabilité P1 que le numéro appelant soit certifié.

Ensuite, on vérifie (E730) si l'identifiant FROM est présent dans le carnet d'adresses BOOK du terminal 2. Si ce n'est pas le cas, on affiche (E750) l'identifiant FROM dans une couleur et une typographie spécifique montrant que ce dernier est certifié, par exemple en vert et avec une première typographie.

Si l'identifiant FROM est présent dans le carnet d'adresses, on peut afficher (E740) directement le contact associé à cet identifiant, comme son nom et/ou son prénom, mais toujours dans la même couleur et la même typographie.

Si les identifiant FROM et PAI sont différents, on compare leurs premiers chiffres ou on vérifie si l'identifiant FROM est conforme au plan ARCEP (E800).

Si c'est le cas ou si les premiers chiffres sont identiques, on joue une sonnerie spécifique S2 (E810), puis on affiche (E820) une probabilité P2 que le numéro appelant soit certifié.

Ensuite, on vérifie (E830) si l'identifiant FROM est présent dans le carnet d'adresses BOOK du terminal 2. Si ce n'est pas le cas, on affiche (E850) l'identifiant FROM dans une couleur et une typographie spécifique montrant que ce dernier n'est pas certifié mais a un format conforme, par exemple en orange et avec une deuxième typographie.

Si l'identifiant FROM est présent dans le carnet d'adresses, on peut afficher (E840) directement le contact associé à cet identifiant, comme son nom et/ou son prénom, mais toujours dans la même couleur et la même typographie.

Si les premiers chiffres sont différents ou si l'identifiant FROM n'est pas conforme au plan ARCEP, on joue une sonnerie spécifique S3 (E910), puis on affiche (E920) une probabilité P3 que le numéro appelant ne soit pas certifié.

On vérifie ensuite (E930) si l'identifiant FROM est présent dans le carnet d'adresses BOOK du terminal 2. Si ce n'est pas le cas, on affiche (E950) l'identifiant FROM dans une couleur et une typographie spécifique montrant que ce dernier n'est pas certifié et n'est pas au format conforme, par exemple en rouge et avec une troisième typographie.

Si l'identifiant FROM est présent dans le carnet d'adresses, on peut afficher (E940) directement le contact associé à cet identifiant, comme son nom et/ou son prénom, mais toujours dans la même couleur et la même typographie.

Dans un mode particulier de réalisation, l'utilisateur U1 peut enrichir le carnet d'adresses BOOK du dispositif 1 à partir des informations du journal d'appel entrant pour mémoriser à la fois l'identifiant FROM et l'identifiant PAI.

Ainsi, dans le cas d'une usurpation d'identité pour laquelle l'identifiant FROM est au format ARCEP et est présent dans le carnet d'adresses mais est différent du PAI, l'utilisateur U1 pourra être notifié de cette usurpation, par exemple par une sonnerie spécifique ou une information visuelle.

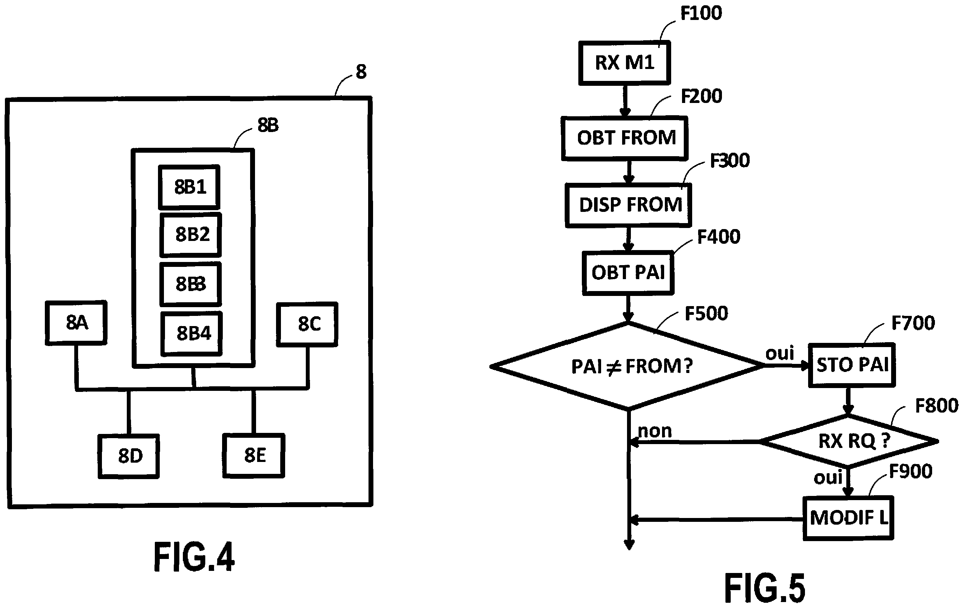

Nous allons maintenant décrire, en référence à la **figure 5****,** les principales étapes d'un procédé de mise à jour de la liste de filtrage L.

On rappelle que cette liste, principalement utilisée pour le filtrage de la communication peut également être utilisée en paramètre de la notification à l'utilisateur du degré de certification de cette communication.

Dans ce mode de réalisation, le procédé est mis en oeuvre, lors de la réception, par le dispositif 8 d'un appel téléphonique émis par l'utilisateur U2.

Lors d'une étape F100, le dispositif de mise à jour 8 reçoit par l'intermédiaire du dispositif de filtrage 1 l'appel émis par le terminal de communication 5 de l'utilisateur U2 à destination du terminal 2 de l'utilisateur U1.

En d'autres termes, le message de signalisation M1 n'a pas été bloqué par le dispositif de filtrage 1.

Dans l'exemple envisagé ici, le message M1 comporte donc :
- un champ PAI (P_Asserted_Id) conforme au protocole SIP, ce champ comportant un identifiant certifié par l'opérateur du réseau 4 dont la valeur (01 23 45 00) correspond au numéro de la ligne physique (i.e. le numéro du standard) reliant le centre d'appel au réseau de communications 4 ; et
- un champ FROM comportant un identifiant non certifié par l'opérateur du réseau 4 et dont la valeur 03 45 67 89 a été configurée par l'équipement PBX 6 du centre d'appel.

Sur réception du message M1 (étape F100) le dispositif 8 extrait (étape F200) du message M1 l'identifiant contenu dans le champ FROM et présente (étape F300) à l'utilisateur U1 cette valeur en l'affichant sur un écran du terminal destinataire 2.

Le dispositif 8 extrait également (étape F400) du message M1 l'identifiant certifié contenu dans le champ PAI.

Le dispositif 8 compare (étape F500) la valeur de l'identifiant certifié contenu dans le champ PAI avec la valeur de l'identifiant non certifié contenu dans le champ FROM.

Si comme c'est le cas dans l'exemple décrit ici, l'identifiant certifié PAI est différent de l'identifiant non certifié FROM (réponse oui à l'étape F500), le dispositif 8 sauvegarde l'identifiant certifié en association avec l'identifiant non certifié (étape F700) dans la mémoire non volatile 8D du dispositif 8.

Dans l'exemple décrit ici, l'utilisateur U1 décide de prendre l'appel et découvre qu'il s'agit d'un appel émanant d'un centre d'appel dont il ne souhaite plus à l'avenir recevoir d'appel.

L'utilisateur U1 consulte alors le registre des appels du terminal 2, sélectionne l'appel qu'il vient de recevoir à partir de l'identifiant FROM qui lui a été présenté et émet une requête RQ (par exemple en sélectionnant un menu dans l'interface utilisateur du terminal 2) à destination du dispositif 8 de mise à jour de la liste noire L, cette requête RQ indiquant qu'il ne souhaite plus recevoir d'appel téléphonique de cet appelant.

Sur réception de la requête RQ, le dispositif 8 de mise à jour ajoute dans la liste noire L lors d'une étape F900 l'identifiant certifié PAI en association avec l'identifiant non certifié FROM qui a été préalablement sauvegardé à l'étape F700 dans la mémoire non volatile 8D.

En variante, le dispositif 8 de mise à jour ajoute également dans la liste noire L lors de l'étape F900 en association avec l'identifiant certifié PAI, une indication selon laquelle l'identifiant certifié PAI est utilisé pour filtrer les communications de type appel téléphonique.

Le dispositif 8 de mise à jour de la liste L peut être incorporé dans le terminal 2, dans la passerelle résidentielle 3 ou dans un équipement du réseau de communication 4.

Dans ces modes de réalisation, le dispositif de filtrage 1 dispose de l'architecture matérielle d'un ordinateur, telle qu'illustrée schématiquement à la **figure 2****.**

Ainsi, le dispositif de filtrage 1 comporte notamment un processeur 1A, une mémoire morte 1B, une mémoire vive 1C, une mémoire non volatile 1D et des moyens de communication 1E. Le processeur 1A, les mémoires 1B-1D et les moyens de communication 1E peuvent éventuellement être partagés avec des moyens correspondants du terminal de communication 2.

La mémoire morte 1B du dispositif de filtrage 1 constitue un support d'enregistrement lisible par le processeur 1A et sur lequel est enregistré un programme d'ordinateur conforme à l'invention, comportant des instructions pour l'exécution des étapes d'un procédé de traitement conforme à l'invention, les étapes de ce procédé de traitement étant décrites en référence à **la** **figure 3****,** dans un mode particulier de réalisation.

Ce programme d'ordinateur définit de façon équivalente un module fonctionnel de traitement 1B1 du dispositif de traitement 1. Ce module permet en particulier d'effectuer des fonctions de filtrage et/ou de notification, ces fonctions étant décrites plus en détail en référence aux étapes du procédé de traitement illustrées à la figure 3.

Dans ces modes de réalisation, le dispositif 8 de mise à jour d'une liste (terminal, passerelle résidentielle 3 ou serveur) dispose de l'architecture matérielle d'un ordinateur, telle qu'illustrée schématiquement à la **figure 4****.**

Ainsi, le dispositif de mise à jour d'une liste 8 comporte notamment un processeur 8A, une mémoire morte 8B, une mémoire vive 8C, une mémoire non volatile 8D et des moyens de communication 8E. Le processeur 8A, les mémoires 8B-8D et les moyens de communication 8E peuvent éventuellement être partagés avec des moyens correspondants du terminal de communication 2.

La mémoire morte 8B du dispositif de mise à jour d'une liste constitue un support d'enregistrement lisible par le processeur 8A et sur lequel est enregistré un programme d'ordinateur conforme à l'invention, comportant des instructions pour l'exécution des étapes d'un procédé de mise à jour d'une liste de filtrage conforme à l'invention, les étapes de ce procédé de mise à jour d'une liste étant décrites ultérieurement en référence à la figure 5, dans un mode particulier de réalisation.

Ce programme d'ordinateur définit de façon équivalente des modules fonctionnels du dispositif 8 de mise à jour d'une liste, tels que notamment un module de réception 8B1 d'une communication à destination du terminal destinataire 2, un module d'obtention 8B2 d'au moins un identifiant certifié et d'un identifiant non certifié de l'appelant à l'origine de la communication à partir d'un message de signalisation de la communication, un module 8B3 de sauvegarde dudit au moins un identifiant certifié en association avec un identifiant non certifié de l'appelant présent dans la signalisation de l'appel et un module d'ajout 8B4 dans la liste L dudit au moins un identifiant certifié en association avec l'identifiant non certifié. Le module d'ajout 8B4 étant activé sur requête d'un utilisateur U1 du terminal destinataire 2. Le module de réception 8B1 utilise notamment les moyens de communication 8E. Les fonctions de ces modules sont décrites plus en détail en référence aux étapes du procédé de mise à jour d'une liste illustrées à la figure 5.

### Autres modes de réalisation

L'invention vise à identifier les communications à filtrer, c'est-à-dire celles qui doivent être acheminées vers un terminal donné et celles qui doivent être bloquées, et à informer l'utilisateur du degré de certification du numéro appelant.

Le blocage et le routage des communications sont des mécanismes connus par l'homme du métier et qui diffèrent selon l'entité qui les met en oeuvre.

Dans le mode de réalisation décrit précédemment, le filtrage selon l'invention est mis en oeuvre au sein d'un terminal, ce terminal étant configuré pour annuler la présentation de l'appel aux terminaux identifiés dans la liste noire comme ne souhaitant pas recevoir cet appel.

En variante l'invention peut être mise en oeuvre dans la passerelle résidentielle 3. Auquel cas, la passerelle peut bloquer l'appel pour l'ensemble des terminaux portant la même identité raccordés derrière la passerelle et éventuellement autoriser ou non d'autres terminaux partageant la même identité publique utilisés en nomadisme de continuer à sonner par l'envoi d'un code de rejet SIP 4XX ou SIP 6XX.

En variante le filtrage peut être mis en oeuvre par un équipement du réseau, par exemple un serveur d'application AS. Auquel cas le filtrage s'applique à tous les terminaux de manière identique.

Pour appliquer le filtrage en fonction d'un terminal partageant une identité publique avec d'autres terminaux:
- L'appel entrant INVITE (FROM, PAI, TO) est transmis depuis le S-CSCF vers le serveur d'application AS qui gère les appels reçus par l'identité publique partagée ;
- L'AS vérifie les terminaux appelés qui ont positionnés un filtrage d'appel pour le couple d'identifiants certifié/non certifié PAI / FROM compris dans le message INVITE;
- L'AS renvoie alors un message SIP INVITE vers le S-CSCF, le message INVITE étant enrichi avec l'en-tête SIP RejectContact et valorisé avec l'adresse de contact AoC (incluant le GRUU ou IMEI du terminal) du ou des terminaux ayant configuré l'identifiant certifié de l'appelant dans leur liste noire ;
- Le serveur S-CSCF déclenche alors son mécanisme de forking uniquement vers les terminaux dont l'AoC n'est pas présente dans le RejectContact de l'INVITE reçu de l'AS. Dans le cas où aucun RejectContact n'est positionné, tous les terminaux reçoivent un message SIP INVITE émis par le S-CSCF via le P-CSCF.

Pour identifier un terminal parmi un ensemble de terminaux partageant la même identité publique SIP, on peut utiliser l'IMEI (International Mobile Equipment Identifier) du terminal, ou lorsque le terminal ne comporte pas de carte SIM, un identifiant temporaire de type « GRUU » tel que normalisé à l'IETF, généré par le S-CSCF et communiqué au terminal au moment de son enregistrement dans le réseau.

Cet identifiant unique GRUU doit alors être communiqué à l'entité réseau responsable du filtrage, par exemple au moyen d'une requête http.

Selon une première variante de ce mode particulier de réalisation de l'invention, une liste noire L est associée à chaque terminal et identifiée à partir d'un identifiant du terminal. La mise à jour d'une telle liste peut être effectuée selon le procédé de mise à jour décrit en référence à la figure 5.

Cette liste noire L peut également être comprise dans une base de données réseau à laquelle le terminal peut accéder via un lien IP internet.

Selon une deuxième variante de ce mode particulier de réalisation de l'invention, la liste noire L est associée à l'identité publique partagée par les terminaux. Une telle liste noire L comprend un identifiant des terminaux associé aux identifiants certifiés pour lesquels les terminaux souhaitent bloquer les communications. La mise à jour d'une telle liste noire L peut être effectuée selon le procédé de mise à jour décrit en référence à la figure 5 en ajoutant dans la liste L en association avec l'identifiant certifié, l'identifiant du terminal 2 ou 2' qui a initié la requête à l'étape F800.

### Description détaillée d'un autre mode de réalisation de l'invention

Dans ce mode de réalisation particulier de l'invention, la liste L est une liste blanche, de sorte que seuls les appels dont les identifiants certifiés sont enregistrés dans la liste L sont présentés à l'utilisateur du terminal 2.

Un mode de réalisation de ce procédé peut être décrit en présentant ses différences avec le procédé de filtrage par liste noire décrit en référence à la figure 3.

Après réception à l'étape E100 du message M1 de signalisation d'appel, de l'extraction de l'identifiant certifié de l'appelant à partir du champ PAI de ce message M1 à l'étape E200, le dispositif 1 compare (étape E510) cet identifiant certifié PAI avec les identifiants certifiés listés dans la liste blanche L.

Dans ce mode de réalisation, le dispositif 1 transmet le message M1 au terminal 2 afin que l'appel soit présenté à l'utilisateur du terminal destinataire 2 uniquement si l'identifiant PAI correspond à un identifiant certifié listé dans la liste blanche.

Dans ce mode de réalisation, la liste blanche peut être construite initialement par un processus en dehors de l'invention. L'utilisateur peut également y ajouter ou en retirer des identifiants certifiés en utilisant un menu de son terminal.

L'invention permet également d'offrir la possibilité à un utilisateur de supprimer un identifiant certifié de la liste blanche sur requête après que l'appel lui a été présenté.

Par ailleurs, dans un mode de réalisation, au cours de l'étape de notification, si les identifiants FROM et PAI diffèrent, on peut utiliser des règles d'affichage et de sonnerie qui sont différentes selon que le couple d'identifiants FROM et PAI est présent dans la liste blanche ou non.

Cela permet notamment de gérer les communications émises depuis des entreprises ou centres d'appel avec qui on souhaite établir une relation, mais pour lesquelles l'identifiant FROM n'est pas nécessairement identique à l'identifiant PAI.

### Description d'autres modes de réalisation de l'invention

Dans les deux premiers modes de réalisation détaillés ci-dessus, le dispositif de traitement exécute une sous-étape de filtrage (E520, E530) en fonction de la comparaison (E400) de l'identifiant certifié PAI avec l'identifiant non certifié FROM et de l'appartenance ou non (E510) de l'identifiant PAI à une liste contenant des identifiants certifiés d'émetteurs associés à des identifiants non certifiés de ces émetteurs.

Dans un autre mode de réalisation, le dispositif de traitement n'effectue pas de sous-étape de filtrage mais seulement une étape de notification (E550) effectuée sur la base des identifiants PAI et FROM et permettant d'informer l'utilisateur du degré de certification de la communication pour lui laisser le choix d'accepter ou rejeter lui-même cette communication.

Dans les deux premiers modes de réalisation détaillés ci-dessus, l'information de fiabilité est un identifiant certifié PAI compris dans un message de signalisation de la communication.

Dans un autre mode de réalisation, l'identifiant certifié PAI n'est pas présenté au moment de la communication, par exemple lorsque les équipements sont d'ancienne génération. Dans ce cas, le procédé de traitement peut être identique au cas où l'identifiant non certifié est différent d'un identifiant certifié par l'opérateur.

Lorsque le réseau mobile est en technologie circuit 2G/3G, le PAI n'est pas fourni au terminal.

Dans un mode de réalisation où la communication est sous couverture 4G et bascule temporairement sur un réseau mobile 2G/3G, le processus de traitement est interrompu. En variante, dans le cas de ce basculement, l'information de fiabilité utilisée dans le procédé provient d'une base de données de fiabilité des précédentes communications effectuée sous couverture 4G et traitées, elles, avec leurs identifiants PAI.

Dans un autre mode de réalisation, l'information de fiabilité utilisée lors du procédé de traitement est fournie par le réseau via un champ de signalisation d'appel encore non exploité. La comparaison de cette information de fiabilité avec l'identifiant non certifié FROM est alors exécutée par le MSC (Mobile Switch Center) et le terminal récupère le résultat de cette comparaison.

Dans un autre mode de réalisation, cette information de fiabilité est fournie au terminal par le serveur d'application téléphonique TAS du coeur de réseau soit via un champ de signalisation d'appel encore non exploité, soit via une plate-forme de notification de type Apple APNS/Google C2M/Microsoft.

## Revendications

1. Procédé de traitement d'une communication destinée à au moins un terminal destinataire, ledit procédé comprenant :
- une étape (E100) de réception d'une communication à destination dudit au moins un terminal destinataire (2) ;
- une étape (E200, E300) d'obtention d'un identifiant certifié (PAI) et d'un identifiant non certifié (FROM) d'un émetteur de ladite communication (U2), lesdits identifiants étant compris dans un message de signalisation (M1) de ladite communication; ledit identifiant certifié identifiant la ligne physique reliant ledit émetteur (U2) et un réseau de communication (4) ;
- une étape (E400) de comparaison dudit identifiant certifié (PAI) avec ledit identifiant non certifié (FROM) ; et
- une étape de traitement (E500) de ladite communication (U2) comportant une étape (E510) de recherche dudit identifiant certifié dans une liste contenant des identifiants certifiés d'émetteurs associés à des identifiants non certifiés de ces émetteurs, ladite étape de traitement étant effectuée en fonction des résultats de ladite étape de comparaison et de ladite étape de recherche.

2. Procédé de traitement selon la revendication 1, dans lequel ladite étape de traitement (E500) comporte une sous-étape (E520, E530) de filtrage de ladite communication.

3. Procédé de traitement selon l'une quelconque des revendications 1 à 2, dans lequel ladite étape de traitement comporte :
- une sous-étape (E550) de notification d'au moins une caractéristique de ladite communication en fonction de ladite étape de comparaison et/ou du résultat de ladite étape de recherche (E510) dudit identifiant certifié (PAI).

4. Procédé de traitement d'une communication destinée à au moins un terminal destinataire et de mise à jour d'une liste (L) de filtrage des communications destinées à au moins un terminal destinataire (2), ledit procédé comprenant :
- une étape (F100, E100) de réception d'une communication à destination dudit au moins un terminal destinataire (2) ;
- une étape (F400, E200, E300) d'obtention d'un identifiant certifié (PAI) et d'un identifiant non certifié (FROM) d'un émetteur (U2) de ladite communication, lesdits identifiants étant compris dans un message de signalisation (M1) de ladite communication ; ledit identifiant certifié identifiant la ligne physique reliant ledit émetteur (U2) et un réseau de communication (4);
- une étape (E400) de comparaison dudit identifiant certifié (PAI) avec ledit identifiant non certifié (FROM) ; et
- une étape de traitement (E500) de ladite communication (U2) comportant une étape (E510) de recherche dudit identifiant certifié dans une liste contenant des identifiants certifiés d'émetteurs associés à des identifiants non certifiés de ces émetteurs, ladite étape de traitement étant effectuée en fonction des résultats de ladite étape de comparaison et de ladite étape de recherche ;
- sur requête (RQ) d'un utilisateur (U1), une étape (F900) d'ajout ou de suppression dans ladite liste (L) dudit identifiant certifié (PAI) en association avec ledit identifiant non certifié (FROM).

5. Procédé de mise à jour selon la revendication 4 dans lequel ladite requête (RQ) fait suite à une présentation (F300) dudit identifiant non certifié (FROM).

6. Procédé de mise à jour selon l'une quelconque des revendications 4 ou 5 dans lequel ladite liste (L) est :
- une liste blanche contenant les identifiants non certifiés et les identifiants certifiés des émetteurs dont les communications destinées audit au moins un terminal destinataire doivent être transmises audit au moins un terminal destinataire ; ou
- une liste noire contenant les identifiants non certifiés et les identifiants certifiés des émetteurs dont les communications destinées audit au moins un terminal destinataire doivent être bloquées.

7. Procédé de mise à jour selon l'une quelconque des revendications 4 à 6 dans lequel ladite étape d'ajout (F900) comprend également l'ajout d'une information d'un type de ladite communication en association avec lesdits identifiants (PAI, FROM).

8. Procédé de mise à jour selon l'une quelconque des revendications 4 à 7 dans lequel ladite liste est une liste noire et dans lequel ladite étape d'ajout (F900) n'est réalisée que si ledit identifiant certifié (PAI) est différent dudit identifiant non certifié (FROM).

9. Procédé selon l'une quelconque des revendications 1 à 8 dans lequel ledit identifiant certifié (PAI) est un identifiant certifié P_Asserted_Id conforme au protocole SIP, Session Initiation Protocol ou un identifiant NDI, Numéro de Désignation de l'Installation, conforme au protocole ISUP, Integrated Services Digital Network Signalling User Part.

10. Programme d'ordinateur comportant des instructions pour l'exécution des étapes du procédé de traitement d'une communication selon l'une quelconque des revendications 1-3 et 9 ou pour l'exécution des étapes du procédé de mise à jour d'une liste selon l'une quelconque des revendications 4 à 9 lorsque ledit programme est exécuté par ordinateur.

11. Système comprenant, un dispositif (1) de traitement d'une communication destinée à au moins un terminal destinataire, ledit dispositif comprenant :
- un module de réception d'une communication à destination dudit au moins un terminal destinataire (2) ;
- un module d'obtention dans un message de signalisation (M1) d'un identifiant certifié (PAI) et d'un identifiant non certifié (FROM) d'un émetteur de ladite communication (U2); ledit identifiant certifié identifiant la ligne physique reliant ledit émetteur (U2) et un réseau de communication (4); - un module de comparaison dudit identifiant certifié (PAI) avec ledit identifiant non certifié (FROM) ;
- un module de recherche dudit identifiant certifié (PAI) dans une liste contenant des identifiants certifiés d'émetteurs associés à des identifiants non certifiés de ces émetteurs ;
et
un module (1B1) de traitement de ladite communication en fonction des résultats de ladite étape de comparaison et de ladite étape de recherche ; et un dispositif (8) de mise à jour d'une liste (L) de filtrage des communications destinées à au moins un terminal destinataire (2), ledit dispositif (8) comprenant :
- un module (8B1) de réception d'une communication à destination dudit au moins un terminal destinataire (2) ;
- un module (8B2) d'obtention d'un identifiant certifié (PAI) et d'un identifiant non certifié (FROM) de l'émetteur (U2) à l'origine de ladite communication, lesdits identifiants étant compris dans un message de signalisation (M1) de ladite communication ;
- un module (8B4) d'ajout ou de suppression dans ladite liste (L), sur requête d'un utilisateur (U1), dudit identifiant certifié (PAI) en association avec ledit identifiant non certifié (FROM).

12. Terminal comprenant un système selon la revendication 11.

13. Passerelle comprenant un système selon la revendication 11.

## Patentansprüche

1. Verfahren zur Bearbeitung einer Kommunikation, die für mindestens ein Ziel-Endgerät bestimmt ist, wobei das Verfahren Folgendes umfasst:
- einen Schritt (E100) des Empfangens einer Kommunikation, die für das mindestens eine Ziel-Endgerät (2) bestimmt ist;
- einen Schritt (E200, E300) des Erhaltens einer zertifizierten Kennung (PAI) und einer nicht zertifizierten Kennung (FROM) von einem Sender der Kommunikation (U2), wobei die Kennungen in einer Nachricht zur Signalisierung (M1) der Kommunikation enthalten sind; wobei die zertifizierte Kennung die physische Leitung identifiziert, die den Sender (U2) und ein Kommunikationsnetz (4) verbindet;
- einen Schritt (E400) des Vergleichens der zertifizierten Kennung (PAI) mit der nicht zertifizierten Kennung (FROM); und
- einen Schritt des Bearbeitens (E500) der Kommunikation (U2), umfassend einen Schritt (E510) des Suchens der zertifizierten Kennung in einer Liste, die zertifizierte Kennungen von Sendern enthält, die mit nicht zertifizierten Kennungen dieser Sender in Verbindung stehen, wobei der Schritt des Bearbeitens in Abhängigkeit von den Ergebnissen des Schritts des Vergleichens und des Schritts des Suchens durchgeführt wird.

2. Verfahren zur Bearbeitung nach Anspruch 1, wobei der Schritt des Bearbeitens (E500) einen Unterschritt (E520, E530) des Filterns der Kommunikation aufweist.

3. Verfahren zur Bearbeitung nach einem der Ansprüche 1 bis 2, wobei der Schritt des Bearbeitens Folgendes aufweist:
- einen Unterschritt (E550) des Mitteilens mindestens eines Merkmals der Kommunikation in Abhängigkeit von dem Schritt des Vergleichens und/oder dem Ergebnis des Schritts des Suchens (E510) der zertifizierten Kennung (PAI).

4. Verfahren zur Bearbeitung einer Kommunikation, die für mindestens ein Ziel-Endgerät bestimmt ist, und zur Aktualisierung einer Liste (L) zur Filterung der Kommunikationen, die für mindestens ein Ziel-Endgerät (2) bestimmt sind, wobei das Verfahren Folgendes umfasst:
- einen Schritt (F100, E100) des Empfangens einer Kommunikation, die für das mindestens eine Ziel-Endgerät (2) bestimmt ist;
- einen Schritt (F400, E200, E300) des Erhaltens einer zertifizierten Kennung (PAI) und einer nicht zertifizierten Kennung (FROM) von einem Sender (U2) der Kommunikation, wobei die Kennungen in einer Nachricht zur Signalisierung (M1) der Kommunikation enthalten sind; wobei die zertifizierte Kennung die physische Leitung identifiziert, die den Sender (U2) und ein Kommunikationsnetz (4) verbindet;
- einen Schritt (E400) des Vergleichens der zertifizierten Kennung (PAI) mit der nicht zertifizierten Kennung (FROM); und
- einen Schritt des Bearbeitens (E500) der Kommunikation (U2), umfassend einen Schritt (E510) des Suchens der zertifizierten Kennung in einer Liste, die zertifizierte Kennungen von Sendern enthält, die mit nicht zertifizierten Kennungen dieser Sender in Verbindung stehen, wobei der Schritt des Bearbeitens in Abhängigkeit von den Ergebnissen des Schritts des Vergleichens und des Schritts des Suchens durchgeführt wird;
- auf Anforderung (RQ) eines Benutzers (U1), einen Schritt (F900) des Hinzufügens oder Löschens in der Liste (L) der zertifizierten Kennung (PAI) in Verbindung mit der nicht zertifizierten Kennung (FROM).

5. Verfahren zur Aktualisierung nach Anspruch 4, wobei die Anforderung (RQ) auf eine Vorlage (F300) der nicht zertifizierten Kennung (FROM) folgt.

6. Verfahren zur Aktualisierung nach einem der Ansprüche 4 oder 5, wobei die Liste (L):
- eine Whitelist ist, die die nicht zertifizierten Kennungen und die zertifizierten Kennungen der Sender enthält, deren Kommunikationen, die für das mindestens eine Ziel-Endgerät bestimmt sind, an das mindestens eine Ziel-Endgerät übertragen werden sollen; oder
- eine Blacklist ist, die die nicht zertifizierten Kennungen und die zertifizierten Kennungen der Sender enthält, deren Kommunikationen, die für das mindestens eine Ziel-Endgerät bestimmt sind, blockiert werden sollen.

7. Verfahren zur Aktualisierung nach einem der Ansprüche 4 bis 6, wobei der Schritt des Hinzufügens (F900) ebenfalls das Hinzufügen einer Information eines Typs der Kommunikation in Verbindung mit den Kennungen (PAI, FROM) enthält.

8. Verfahren zur Aktualisierung nach einem der Ansprüche 4 bis 7, wobei die Liste eine Blacklist ist, und wobei der Schritt des Hinzufügens (F900) nur dann ausgeführt wird, wenn sich die zertifizierte Kennung (PAI) von der nicht zertifizierten Kennung (FROM) unterscheidet.

9. Verfahren nach einem der Ansprüche 1 bis 8, wobei die zertifizierte Kennung (PAI) eine zertifizierte P_Asserted_Id-Kennung entsprechend dem SIP-Protokoll, Session Initiation Protocol, oder eine NDI, Installationsbezeichnungsnummer, -Kennung ist, die dem ISUP, Integrated Services Digital Network Signalling User Part,-Protokoll entspricht.

10. Computerprogramm, umfassend Anweisungen für die Ausführung der Schritte des Verfahrens zur Bearbeitung einer Kommunikation nach einem der Ansprüche 1 bis 3 und 9 oder zur Ausführung der Schritte des Verfahrens zur Aktualisierung einer Liste nach einem der Ansprüche 4 bis 9, wenn das Programm von einem Computer ausgeführt wird.

11. System, umfassend
eine Vorrichtung (1) zur Bearbeitung einer Kommunikation, die für mindestens ein Ziel-Endgerät bestimmt ist, wobei die Vorrichtung Folgendes umfasst:
- ein Modul zum Empfangen einer Kommunikation, die für das mindestens eine Ziel-Endgerät (2) bestimmt ist;
- ein Modul zum Erhalten, in einer Signalisierungsnachricht (M1), einer zertifizierten Kennung (PAI) und einer nicht zertifizierten Kennung (FROM) eines Senders der Kommunikation (U2);
wobei die zertifizierte Kennung die physische Leitung identifiziert, die den Sender (U2) und ein Kommunikationsnetz (4) verbindet;
- ein Modul zum Vergleichen der zertifizierten Kennung (PAI) mit der nicht zertifizierten Kennung (FROM);
- ein Modul zum Suchen der zertifizierten Kennung (PAI) in einer Liste, die zertifizierte Kennungen von Sendern enthält, die mit nicht zertifizierten Kennungen dieser Sender in Verbindung stehen; und
ein Modul (1B1) zur Bearbeitung der Kommunikation in Abhängigkeit der Ergebnisse des Schritts des Vergleichens und des Schritts des Suchens; und eine Vorrichtung (8) zur Aktualisierung einer Liste (L) zur Filterung der Kommunikationen, die für mindestens ein Ziel-Endgerät (2) bestimmt sind, wobei die Vorrichtung (8) Folgendes umfasst:
- ein Modul (8B1) zum Empfangen einer Kommunikation, die für das mindestens eine Ziel-Endgerät (2) bestimmt ist;
- ein Modul (8B2) zum Erhalten einer zertifizierten Kennung (PAI) und einer nicht zertifizierten Kennung (FROM) von dem Sender (U2), der der Ursprung der Kommunikation ist, wobei die Kennungen in einer Nachricht zur Signalisierung (M1) der Kommunikation enthalten sind;
- ein Modul (8B4) zum Hinzufügen oder Löschen in der Liste (L), auf Anforderung eines Benutzers (U1), der zertifizierten Kennung (PAI) in Verbindung mit der nicht zertifizierten Kennung (FROM).

12. Endgerät, das ein System nach Anspruch 11 umfasst.

13. Gateway, der ein System nach Anspruch 11 umfasst.

## Claims

1. Method for processing a communication intended for at least one destination terminal, said method comprising:
- a step (E100) of receiving a communication intended for said at least one destination terminal (2);
- a step (E200, E300) of obtaining a certified identifier (PAI) and an uncertified identifier (FROM) of a sender of said communication (U2), said identifiers being contained in a signalling message (M1) of said communication, said certified identifier identifying the physical line connecting said sender (U2) and a communication network (4);
- a step (E400) of comparing said certified identifier (PAI) with said uncertified identifier (FROM); and
- a step (E500) of processing said communication (U2) including a step (E510) of searching for said certified identifier in a list containing certified identifiers of senders associated with uncertified identifiers of these senders, said processing step being carried out depending on the results of said comparing step and said searching step.

2. Processing method according to Claim 1, wherein said processing step (E500) includes a substep (E520, E530) of filtering said communication.

3. Processing method according to either one of Claims 1 and 2, wherein said processing step includes:
- a substep (E550) of notifying at least one characteristic of said communication depending on said comparing step and/or the result of said step (E510) of searching for said certified identifier (PAI).

4. Method for processing a communication intended for at least one destination terminal and for updating a list (L) for filtering communications intended for at least one destination terminal (2), said method comprising:
- a step (F100, E100) of receiving a communication intended for said at least one destination terminal (2);
- a step (F400, E200, E300) of obtaining a certified identifier (PAI) and an uncertified identifier (FROM) of a sender (U2) of said communication, said identifiers being contained in a signalling message (M1) of said communication, said certified identifier identifying the physical line connecting said sender (U2) and a communication network (4);
- a step (E400) of comparing said certified identifier (PAI) with said uncertified identifier (FROM); and
- a step (E500) of processing said communication (U2) including a step (E510) of searching for said certified identifier in a list containing certified identifiers of senders associated with uncertified identifiers of these senders, said processing step being carried out depending on the results of said comparing step and of said searching step;
- on request (RQ) by a user (U1), a step (F900) of adding to or deleting from said list (L) said certified identifier (PAI) in association with said uncertified identifier (FROM).

5. Updating method according to Claim 4, wherein said request (RQ) is made following a presentation (F300) of said uncertified identifier (FROM).

6. Updating method according to either one of Claims 4 and 5, wherein said list (L) is:
- a whitelist containing the uncertified identifiers and the certified identifiers of senders the communications of which intended for said at least one destination terminal must be transmitted to said at least one destination terminal; or
- a blacklist containing the uncertified identifiers and the certified identifiers of senders the communications of which intended for said at least one destination terminal must be blocked.

7. Updating method according to any one of Claims 4 to 6, wherein said adding step (F900) also comprises adding a piece of information on a type of said communication in association with said identifiers (PAI, FROM).

8. Updating method according to any one of Claims 4 to 7, wherein said list is a blacklist and wherein said adding step (F900) is carried out only if said certified identifier (PAI) is different from said uncertified identifier (FROM).

9. Method according to any one of Claims 1 to 8, wherein said certified identifier (PAI) is a certified identifier P_Asserted_Id according to the SIP protocol (SIP standing for Session Initiation Protocol) or an NDI identifier (NDI standing for *Numéro de Designation de l'Installation*) according to the ISUP protocol (ISUP standing for Integrated Services Digital Network Signalling User Part).

10. Computer program including instructions for executing steps of the method for processing a communication according to any one of Claims 1-3 and 9 or for executing steps of the method for updating a list according to any one of Claims 4 to 9 when said program is executed by computer.

11. System comprising:
a device (1) for processing a communication intended for at least one destination terminal, said device comprising:
- a module for receiving a communication intended for said at least one destination terminal (2);
- a module for obtaining, from a signalling message (M1), a certified identifier (PAI) and an uncertified identifier (FROM) of a sender of said communication (U2), said certified identifier identifying the physical line connecting said emitter (U2) and a communication network (4);
- a module for comparing said certified identifier (PAI) with said uncertified identifier (FROM);
- a module for searching for said certified identifier (PAI) in a list containing certified identifiers of senders associated with uncertified identifiers of these senders; and
- a module (1B1) for processing said communication depending on the results of said comparing step and said searching step; and
a device (8) for updating a list (L) of filtering communications intended for at least one destination terminal (2), said device (8) comprising:
- a module (8B1) for receiving a communication intended for said at least one destination terminal (2);
- a module (8B2) for obtaining a certified identifier (PAI) and an uncertified identifier (FROM) of the sender (U2) who originated said communication, said identifiers being contained in a signalling message (M1) of said communication; and
- a module (8B4) for adding to or deleting from said list (L), on request by a user (U1), said certified identifier (PAI) in association with said uncertified identifier (FROM).

12. Terminal comprising a system according to Claim 11.

13. Gateway comprising a system according to Claim 11.
